Europäisches Patentamt

European Patent Office

Office européen des brevets

(11) Publication number: **0 227 139 B1**

# EUROPEAN PATENT SPECIFICATION

(45) Date of publication of patent specification: **19.05.93** (51) Int. Cl.⁵: **C08L 53/02**, C08L 23/12

(21) Application number: **86202048.4**

(22) Date of filing: **19.11.86**

Divisional application 90203003.0 filed on
13/11/90.

(54) **Low smoke modified polypropylene insulation compositions and process for the preparation thereof.**

(30) Priority: **27.11.85 US 802806**
**27.11.85 US 802797**
**30.12.85 US 814706**
**30.12.85 US 814705**

(43) Date of publication of application:
**01.07.87 Bulletin 87/27**

(45) Publication of the grant of the patent:
**19.05.93 Bulletin 93/20**

(84) Designated Contracting States:
**AT BE CH DE ES FR GB IT LI NL SE**

(56) References cited:
**JP−A− 60 170 651      US−A− 3 271 340**
**US−A− 3 464 850      US−A− 3 480 580**
**US−A− 3 830 767      US−A− 4 006 116**

**C.M. BLOW et al.: "Rubber technology and
manufacture" second edition, 1982, pages
218−219, Butterworth Scientific, London, GB**

**CHEMICAL ABSTRACTS, vol. 100, no. 24, 11th
June 1984, page 53, no. 193053j, Columbus,
Ohio, US; & JP−A−59 11 332 (SHOWA DE−
NKO K.K.) 20−01−1984**

**CHEMICAL ABSTRACTS, vol. 104, no. 14, 7th
April 1986, page 40, no. 110779j, Columbus,
Ohio, US; & JP−A−60 170 651 (HITACHI CA−
BLE LTD) 04−09−1985**

(73) Proprietor: **SHELL INTERNATIONALE RE−
SEARCH MAATSCHAPPIJ B.V.
Carel van Bylandtlaan 30
NL−2596 HR Den Haag(NL)**

(72) Inventor: **Djiauw, Lie Khong
8130 Silent Cedars Drive
Houston, Texas 77095(US)**
Inventor: **Icenogle, Ronald Dean
South 2931 Howard
Spokane Washington 99203−1747(US)**

## Description

The invention relates to a flame retardant insulation composition and to a process for the preparation thereof.

The most common method for reducing the flammability of wire and cable insulation and jacketing materials is the use of an organic bromine or chlorine compound along with antimony oxide. This system is very effective as a flame retardant, but such materials produce a dense black smoke when burned, and also produce hydrogen chloride or hydrogen bromide, which are both corrosive and toxic. Because of this, there has been a great deal of interest in flame retarded systems that produce lower amounts of smoke and toxic and corrosive gases when they are burned. There appear to be two main approaches that are being followed to meet this goal. The first is to eliminate halogens from the system and use instead large loadings of alumina trihydrate, another common fire retardant, or the similar filler magnesium hydroxide. The second is to develop additives that reduce the smoke and acid gas production of the halogenated systems. In addition to low smoke and low toxicity these compositions must also have attractive physical properties in order to be used for wire and cable applications. These properties include hardness, abrasion resistance, environmental stability, deformation resistance, low temperature flexibility, oil resistance and good electrical properties. At present there are no low – smoke, low – toxicity, flame – retardant materials which are readily available although some new materials including metal hydrate filled polyethylene are becoming available.

Metal hydrates such as alumina trihydrate and magnesium hydroxide contain water bonded to a crystal structure with the metal atom. When heated to a sufficiently high temperature these compounds decompose and release water which subsequently vaporizes. This process of decomposition and vaporization absorbs heat, thus slowing down the initial heating of the insulation material and consequently slows down the subsequent burning of the material. After this cooling effect is overwhelmed however, the presence of the metal hydrates has little effect on the subsequent process of burning. Unlike the halogenated flame retardant composition, metal hydrate compositions with non – halogenated polyolefins break down quickly into monomer units and burn relatively cleanly without a great deal of smoke production. In addition, since metal hydrates only add water to the system, they should not increase the emission of toxic or corrosive gases beyond what already would be produced by the system.

Magnesium hydroxide fillers along with alumina trihydrate fillers have been used in flame retardant polypropylene compositions. Alumina trihydrate is generally more effective as a flame retardant than is magnesium hydroxide due to the greater amount of water incorporated in that filler; however, magnesium hydroxide has specific advantages, for example, better processability when incorporated into a polyolefin composition and a higher decomposition temperature than alumina trihydrate (330 °C versus 230 °C). This increase in decomposition temperature allows a flame retardant polymer composition containing magnesium hydroxide to be processed at a higher temperature than a compound with alumina trihydrate. The higher processing temperatures allow much faster processing due to lower viscosities.

Polypropylene, which is readily available at a reasonable cost, has found many industrial uses because of its desirable physical properties, such as ease of fabrication by all conventional methods; high melting point of stereoregular, e.g., isotactic, polypropylene and compatibility with many other commercial resins, which permits a large number of blends having specific properties. Brittleness in these compositions can be reduced either by copolymerizing propylene with ethylene to form block copolymers or by blending homopolypropylene with rubbers.

From the Japanese patent application No. 60 – 170651 a non – corrosive flame retardant resin com – position was known, which comprised:

(a) an A – B – A block copolymer, wherein block A is a polystyrene block and wherein block B is a polyisoprene or polybutadiene polymer block, having been hydrogenated to full disappearance of unsaturation;

(b) a halogen – free polyolefinic polymer and in particular polypropylene, with a softening agent, such as a mineral oil, a vegetable oil or a synthetic oil; and

(c) a metal hydroxide, which may have been surface treated with inter alia a silane coupling agent, to improve the extrudability of the composition.

However, a need for further improvement of the properties of non – corrosive flame retardant resin compositions, to be used for modern, high – tech applications, still existed.

A flame retardant insulation composition has now been found that forms a self – extinguishing, low smoke and halogen free insulation composition which exhibits high ultimate elongation and is relatively easy to process.

It has been found that functionalizing the polypropylene in an insulation blend improves the physical properties, e.g., tensile strength and elongation. It has been found that the brittleness problem can be

2

essentially eliminated by using functionalized polypropylene. The functionalized polypropylene has reactive groups grafted to it which will attach to a filler producing bonding between the polypropylene and the filler, thereby producing better physical properties.

It has also been found that conventional magnesium hydroxide fillers cannot be successfully blended into rubber modified polypropylene compositions in the absence of component (e), being a functionalized low molecular weight polypropylene wax. These compositions when filled to a reasonable loading of magnesium hydroxide cannot be processed due to agglomeration of the filler particles. When agglomeration occurs the effective particle size of the filler is increased dramatically and therefore the processability and the properties of the end product are degraded.

Accordingly, it would be desirable to provide a magnesium hydroxide filler which has good physical properties and would not adversely affect the processability by agglomeration.

Fillers may therefore be surface treated with a coupling agent prior to blending to enhance the bonding between the functionalized polypropylene and the filler.

Furthermore, it has been found that addition of a small amount of a functionalized low molecular weight polypropylene wax to the composition dramatically increases the tensile strength of these compositions.

Accordingly, the present invention provides a flame retardant insulation composition comprising the following components: −

(a) in the range of from 5 to 40 per cent by weight of a hydrogenated monoalkylarene (A) − conjugated diene (B) block copolymer containing at least two end blocks A and at least one mid block B;

(b) in the range of from 1 to 20 per cent by weight of a plasticizer;

(c) in the range of from 1 to 40 per cent by weight of an isotactic or syndiotactic polypropylene;

(d) in the range of from 10 to 85 per cent by weight of a hydrated inorganic filler which has been surface treated with a coupling agent;

characterized in that polypropylene may optionally have been functionalized and that a functionalized low molecular weight polypropylene wax is included as component (e), in an amount in the range of from 0.25 to 10 per cent by weight.

The compositions of the present invention are prepared by combining the required components in the correct proportions in conventional blending equipment such as a rubber mill or mixer, for example, a Banbury mixer. This is usually done above the melting temperature of the polymeric materials.

The not functionalized polypropylene or homopolypropylene preferably should be isotactic and may be, for example, of the type corresponding to Shell PP − 5944 S, PP − 5520 and PP DX − 5088, available from Shell Chemical Company, Houston, Texas. Most commercial isotactic polypropylenes are suitable in the compositions of this invention. Syndiotactic homopolymers also can be used.

Functionalized polypropylenes are well known in the art and may be prepared, for example, according to the procedure described in US patent specification 3,480,580 or 3,481,910. These polymers may be prepared from homopolypropylene which preferably should be isotactic and may be, for example, the types corresponding to Shell PP − 5944 S, PP − 5520 and PP DX − 5088 mentioned hereinbefore. Syndiotactic homopolymers also can be used. A preferred functionalized polypropylene is maleic anhydride func − tionalized polypropylene of the type corresponding to Plexar 2110, available from Northern Petrochemical Company, Rolling Meadows, Illinois, U.S.A.

The fillers used in the present invention are the hydrated inorganic fillers, e.g. hydrated aluminium oxides ($Al_2O_3.3H_2O$ or $Al(OH)_3$), hydrated magnesia, hydrated calcium silicate and zinc borate. Of these compounds, the most preferred are hydrated aluminium oxide and magnesium hydroxide.

Coupling agents may include fatty acid metal salts, for example oleates or stearates; silanes, maleates, titanates and zirco − aluminates.

The filler particle size is relatively non − important and may be in accordance with those sizes used by the prior art. Preferred particle sizes are less than 5 $\mu$m. It has also been found that magnesium hydroxide fillers with a high aspect ratio crystallate shape and larger size are also less likely to agglomerate than those with a lower aspect ratio. Aspect ratios for the crystallites should be greater than 4 and mean secondary particle (agglomerate) size should be less than 3 $\mu$m and are preferably in the range of from 0.6 to 1.2 $\mu$m.

Functionalized low molecular weight polypropylene waxes are well known in the art and may be prepared, for example, from polymers prepared according to the procedures described in U.S. patent specifications 2,969,345 and 3,919,176. The compositions according to the invention and containing such waxes preferably contain not functionalized polypropylene and may contain not functionalized polypropylene as well as functionalized polyprolylene.

A particularly preferred functionalized low molecular weight polypropylene wax is a normally solid thermoplastic propylene − based polymer modified by monomers having reactive carboxylic acid groups, particularly a copolymer of a major proportion of propylene and a minor proportion, typically from 1 to 30, preferably from 2 to 20, per cent by weight, of an ethylenically unsaturated carboxylic acid. Specific examples of such suitable ethylenically unsaturated carboxylic acids (which term includes mono − and polybasic acids, acid anhydrides, and partial esters of polybasic acids) are acrylic acid, methacrylic acid, crotonic acid, fumaric acid, maleic acid, itaconic acid, maleic anhydride monomethyl maleate, monoethyl maleate, monomethyl fumarate, monoethyl fumarate, tripropylene glycol monomethyl ether acid maleate, or ethylene glycol monophenyl ether acid maleate. The carboxylic acid monomer is preferably selected from $\alpha,\beta$ − ethylenically unsaturated mono − and polycarboxylic acids and acid anhydrides having from 3 to 8 carbon atoms per molecule and partial esters of such polycarboxylic acids wherein the acid moiety has at least one carboxylic acid group and the alcohol moiety has from 1 to 20 carbon atoms. The copolymer can also contain other copolymerizable monomers including an ester of acrylic acid. The comonomers can be combined in the copolymer in any way, for example, as random copolymers, as block or sequential copolymers, or as graft copolymers. Materials of these kinds and methods of making them are readily known in the art. Specific examples of such copolymers are ethylene acrylic acid copolymer, ethylene methacrylic acid copolymer, ethylene maleic acid copolymer and the like.

Functionalized low molecular weight polypropylene wax is available from, for example, Eastman Chemical Products Inc. under the trade name "Epolene® E43".

The hydrogenated monoalkyl arene − conjugated diene block copolymers useful in the present invention are well known in the art. This block copolymer, for example, as defined in U.S. patent specification 4,110,303, has at least two monoalkenyl arene polymer end blocks A and at least one polymer mid block B of a substantially completely hydrogenated conjugated diene polymer block, an ethylene − propylene polymer block or an ethylene − butene polymer block. The block copolymers employed in the present invention may have a variety of geometrical structures, since the invention does not depend on any specific geometrical structure, but rather upon the chemical constitution of each of the polymer blocks. Thus, the structures may be linear, radial or branched so long as each copolymer has at least two polymer end blocks A and at least one polymer mid block B as defined hereinbefore. Methods for the preparation of such polymers are known in the art. Particular reference will be made to the use of lithium based catalysts and especially lithium alkyls for the preparation of the precursor polymers (polymers before hydrogenation). U.S. patent specification 3,595,942 not only describes some of the polymers of the present invention but also describes suitable methods for their hydrogenation. The structure of the polymers is determined by their method of polymerization. For example, linear polymers result by sequential introduction of the desired monomers into the reaction vessel when using such initiators as lithium − alkyls or dilithiostilbene and the like, or by coupling a two segment block copolymer with a difuntional coupling agent. Branched structures, on the other hand, may be obtained by the use of suitable coupling agents having a functionality with respect to the precursor polymers of three or more. Coupling may be effected with multifunctional coupling agents such as dihaloalkanes or alkenes and divinylbenzene as well as certain polar compounds such as silicon halides, siloxanes or esters of monohydric alcohols with carboxylic acids. The presence of any coupling residues in the polymer may be ignored for an adequate description of the polymers forming a part of the compositions of this invention. Likewise, in the generic sense, the specific structures also may be ignored. The invention applies especially to the use of selectively hydrogenated polymers having the configuration before hydrogenation of the following typical species:

polystyrene − polybutadiene − polystyrene (SBS)
polystyrene − polyisoprene − polystyrene (SIS)
poly(alpha − methylstyrene) − polybutadiene − poly(alpha − methylstyrene) and
poly(alpha − methylstyrene) − polyisoprene − poly(alpha − methylstyrene).

It will be understood that both blocks A and B may be either homopolymer or random copolymer blocks as long as each block predominates in at least one class of the monomers characterizing the blocks and as long as the A blocks individually predominate in monoalkenyl arenes and the B blocks individually predominate in dienes. The term "monoalkenyl arene" will be taken to include especially styrene and its analogs and homologs including alpha − methylstyrene and ring − substituted styrenes, particularly ring − methylated styrenes. The preferred monoalkenyl arenes are styrene and alpha − methylstyrene, and styrene is particularly preferred. The blocks B may comprise homopolymers of butadiene or isoprene and copolymers of one of these two dienes with a monoalkenyl arene as long as the blocks B predominate in conjugated diene units. When the monomer employed is butadiene, it is preferred that between about 35 and about 55 mol per cent of the condensed butadiene units in the butadiene polymer block have 1,2 configuration. Thus, when such a block is hydrogenated, the resulting product is, or resembles a regular copolymer block of ethylene and 1 − butene (EB). If the conjugated diene employed is isoprene, the resulting hydrogenated product is or resembles a regular copolymer block of ethylene and propylene (EP). Ethylene − butene or ethylene − propylene blocks prepared via direct polymerization and not by hy −

4

drogenation of conjugated diene polymer blocks are also contemplated by the present invention.

Hydrogenation of the precursor block copolymers, if required, is preferably effected by use of a catalyst comprising the reaction products of an aluminium alkyl compound with nickel or cobalt carboxylates or alkoxides under such conditions as to substantially completely hydrogenate at least 80% of the aliphatic double bonds while hydrogenating no more than about 25% of the alkenyl arene aromatic double bonds. Preferred block copolymers are those where at least 99% of the aliphatic double bonds are hydrogenated while less than 5% of the aromatic double bonds are hydrogenated.

The average molecular weights of the individual blocks may vary within certain limits. In most instances, the monoalkenyl arene blocks will have number average molecular weights between 5,000 and 125,000, preferably between 7,000 and 60,000, while the conjugated diene blocks either before or after hydrogena − tion will have average molecular weights between 10,000 and 300,000, preferably between 30,000 and 150,000. The total average molecular weight of the block copolymer is typically between 25,000 and 250,000, preferably between 35,000 and 200,000. These molecular weights are most accurately determined by tritium counting methods or osmotic pressure measurements.

The proportion of the monoalkenyl arene blocks should be between about 8 and 55% by weight of the block copolymer, preferably between about 10 and 35% by weight.

In addition, the present composition contains a plasticizer, for example, saturated hydrocarbon or mineral oils, hydrogenated or saturated hydrocarbon resins along with additives such as stabilizers and oxidation inhibitors. Aliphatic oils and resins are preferred to aromatic oils and resins since aromatics tend to cyclicize resulting in colour bodies. Preferred oils are primarily aliphatic, saturated mineral oils. Preferred resins are saturated or hydrogenated hydrocarbon resins, such as hydrogenated polymers of dienes and olefins, preferably a styrene − butadiene diblock copolymer. These additional components must be com − patible with the block copolymer component. The selection of the other components depends upon a number of factors, for example, the method for coating a wire.

The compositions may be modified with supplementary materials such as stabilizers and oxidation inhibitors. Stabilizers and oxidation inhibitors are typically added to the compositions in order to protect the polymers against degradation during preparation and use of the composition. Combinations of stabilizers are often more effective, due to the different mechanisms of degradation to which various polymers are subject. Certain sterically hindered phenols, organo − metallic compounds, aromatic amines and sulphur compounds are useful for this purpose. Especially effective types of these materials include the following: −

1. Benzothiazoles, such as 2 − (dialkyl − hydroxybenzyl − thio)benzothiazoles.

2. Esters of hydroxybenzyl alcohols, such as benzoates, phthalates, stearates, adipates or acrylates of 3,5 − dialkyl − 1 − hydroxy − benzyl alcohols.

3. Stannous phenyl catecholates.

4. Zinc dialkyl dithiocarbamates.

5. Alkylphenols, for example, 2,6 − di − tert − butyl − 4 − methylphenol.

6. Dilaurylthio − dipropionate (DLTDP).

Examples of commercially available antioxidants are "Ionox 220", a trade mark for 4,4 − methylene − bis − (2,6 − di − t − butyl − phenol) and "Ionox 330", a trade mark for 3,4,6 − tris(3,5 − di − t − butyl − p − hydroxy − benzyl) − 1,3,5 − trimethylbenzene, "Dalpac 4C", a trade mark for 2,6 − di(t − butyl) − p − cresol, "Naugawhite", a trade mark for alkylated bisphenol, "Butyl Zimate", a trade mark for zinc dibutyl dithiocarbamate, and "Agerite Geltrol", a trade mark for alkylated − arylated bisphenolic phosphite. From about 0.01 per cent to about 5.0 per cent by weight of one or more antioxidants is generally added to the composition. Table I hereinafter shows typical, preferred and most preferred contents of components (a), (b), (c) and (d) in the compositions according to the invention, expressed in per cent by weight.

TABLE I

| Component | | Typical | Preferred | Most Preferred |
|---|---|---|---|---|
| (a) | Block Copolymer | 5 – 40 | 10 – 30 | 15 – 20 |
| (b) | Plasticizer (oil) | 1 – 20 | 2 – 15 | 4 – 8 |
| (c) | Modified Polypropylene | 1 – 40 | 2 – 20 | 4 – 8 |
| (d) | Filler | 10 – 85 | 40 – 75 | 63 – 75 |
| (e) | Functionalized Low Molecular Weight Polypropylene Wax | 0.25 – 10 | 0.5 – 5 | 1 – 2 |

The particular amounts of each component may vary somewhat in the resultant composition depending on the components employed and their relative amounts.

The following examples further illustrate the invention.

Examples 1 – 11

The components used were as follows:

Block Copolymer 1 is a S – EB – S with GPC block molecular weights of about 29,000 – 125,000 – 29,000.

Block Copolymer 2 is a S – EB – S with GPC block molecular weights of about 10,000 – 50,000 – 10,000.

Block Copolymer 3 is a S – EB – S with GPC block molecular weights of 7,000 – 35,000 – 7,000.

The oil was Penreco 4434 (trade mark) oil available from Penreco Company. The polypropylene was homopolypropylene PP 5520 (trade mark) from Shell Chemical Company. The modified polypropylene was a maleic anhydride functionalized polypropylene, Plexar 2110 (trade mark) from Northern Petrochemical Company in Rolling Meadows, Illinois. The ATH was alumina trihydrate, 1,0 $\mu$m precipitated Hydral 710B (trade mark) from Alcoa. The $Mg(OH)_2$ was from Ventron Division of Morton Thiocol Inc. with a secondary (aggregate) particle size of about 4 $\mu$m. Surface treated $Mg(OH)_2$ was Kisuma 5B (trade mark) from Kyowa Chemical Industry Ltd. which is oleate treated and has a secondary particle (aggregate) size of about 0.8 $\mu$m.

The following antioxidants were used.

Irganox 1010 (trade mark); tetra – bismethylene 3 – (3,5 – ditertbutyl – 4 hydroxyphenyl) – propionate methane from Ciba – Geigy.

Irganox MD – 1024 (trade mark); stabilizers from Ciba Geigy.

DLTDP; Plastanox DLTDP (trade mark), American Cyanamid.

Compositions are in per cent by weight.

Examples were extruded insulation coating on 18AWG solid conductor 0.762 mm samples. All insulation coatings were conducted at 190 ˚C melt temperature.

In Example 1 conventional nonfunctionalized homopolypropylene was used. Examples 2 to 11 incor – porate a maleic anhydride functionalized polypropylene. The results are presented in Table II.

TABLE II

| | Example | | | | | | | | | | |
|---|---|---|---|---|---|---|---|---|---|---|---|
| | 1 | 2 | 3 | 4 | 5 | 6 | 7 | 8 | 9 | 10 | 11 |
| Block Copolymer Rubber | | | | | | | | | | | |
| 1 | 16.00% | 14.70% | 7.35% | 18.37% | 18.05% | 21.40% | 16.32% | 17.67% | 14.97% | — | — |
| 2 | — | — | — | — | — | — | — | — | — | 16.32% | — |
| 3 | — | — | — | — | — | — | — | — | — | — | 16.32% |
| Oil | 8.00% | 7.35% | 7.35% | 3.68% | 4.00% | 4.00% | 5.68% | 5.68% | 5.68% | 7.35% | 7.35% |
| Polypropylene | 5.00% | — | — | — | — | — | — | — | — | — | — |
| Modified Polypropylene | — | 7.35% | 14.70% | 7.35% | 7.35% | 4.00% | 7.35% | 6.00% | 8.70% | 7.35% | 7.35% |
| Surface Treated Mg(OH)$_2$ | 70.40% | 70.00% | 70.00% | 70.00% | 70.00% | 70.00% | 70.00% | 70.00% | 70.00% | 70.00% | 70.00% |
| Irganox 1010 | 0.25% | 0.10% | 0.25% | 0.25% | 0.25% | 0.25% | 0.25% | 0.25% | 0.25% | 0.25% | 0.25% |
| Irganox 1024 | 0.10% | 0.10% | 0.10% | 0.10% | 0.10% | 0.10% | 0.15% | 0.15% | 0.15% | 0.15% | 0.15% |
| DLTDP | 0.25% | 0.40% | 0.25% | 0.25% | 0.25% | 0.25% | 0.25% | 0.25% | 0.25% | 0.25% | 0.25% |
| Stress at Break (MPa) | 2.76 | 6.62 | 6.69 | 9.45 | 9.31 | 8.34 | 8.69 | 6.76 | 8.48 | 7.52 | 6.55 |
| Elongation at Break (%) | 370 | 250 | 0 | 350 | 330 | 320 | 300 | 330 | 350 | 600 | 600 |
| Line speed (cm/s) | 127 | — | 25 | 23 | 25 | 25 | 25 | 25 | 25 | 25 | 25 |
| Screw speed (RPM)[1] | 150 | 30 | 29 | 28 | 36 | 34 | 30 | 30 | 30 | 30 | 30 |
| Power Input (Ampere) | 10 | 17 | 13 | 23 | 24 | 23 | 16 | 19 | 20.5 | 17 | 14 |
| Head Pressure (MPa) | 9.24 | 28 | 21 | 36 | 38 | 34 | 28 | 32 | 33 | 32 | 24 |
| Limiting Oxygen Index % | 31.0 | 29.5 | 28.5 | 30.0 | — | — | — | 34.0 | 31.0 | — | — |

1) revolutions per minute.

The Examples 2 to 11 showed at least a two fold and as high as a three fold increase in the stress at break, compared with Example 1. The modified polypropylene is much more effective in reinforcing these compositions. Each Example contained treated Mg(OH)$_2$ and showed good comparable physical properties plus good processability.

### Comparative Experiments A and B

Comparative Experiments A and B were carried out as described in Examples 1–11 and Table III. Table III also shows the properties found for control blends with conventional Mg(OH)$_2$ and ATH respectively. These were either not able to be coated or were difficult to process as indicated by the low screw speed and high power input.

### TABLE III

| Block Copolymer Rubber | Comparative Experiment | |
|---|---|---|
| | A | B |
| 1 | 14.70% | 15.70% |
| 2 | — | — |
| 3 | — | — |
| Oil | 7.35% | 7.85% |
| Polypropylene | — | — |
| Modified Polypropylene | 7.35% | 7.85% |
| ATH | — | 68.00% |
| Mg(OH)$_2$ | 70.00% | — |
| Surface Treated Mg(OH)$_2$ | — | — |
| Irganox 1010 | 0.10% | 0.10% |
| Irganox 1024 | 0.10% | 0.10% |
| DLTDP | 0.40% | 0.40% |
| Stress at Break (MPa) | * | 7.79 |
| Elongation at Break (%) | * | 300 |
| Line speed (cm/s) | * | — |
| Screw speed (RPM)[1] | * | 20 |
| Power Input (Ampère) | * | 27 |
| Head Pressure (MPa) | * | 54.5 |
| Limiting Oxygen Index % | * | 30.0 |

* Could not be coated.
[1] revolutions per minute.

### Examples 12–17

Examples 12–17 were carried out as described in Examples 1–11 and Table IV with the difference that a functionalized low molecular weight polypropylene wax was used. This wax was functionalized with maleic anhydride and was available from Eastman Chemical Products Inc. under the trade name "Epolene E43". The results of the examples 12 – 17 and of Example 1 are stated in Table IV.

Example 1 shows properties of the composition without the functionalized low molecular weight polypropylene wax component. The examples 12 to 17 showed significantly increased tensile strength expressed as stress at break. Higher amounts of the functionalized low molecular weight polypropylene wax tended to produce brittle compositions.

TABLE IV

|  | 1 | Example 12 | 13 | 14 | 15 | 16 | 17 |
|---|---|---|---|---|---|---|---|
| Block Copolymer Rubber 1 | 16.00% | 16.90% | 16.90% | 14.40% | 14.40% | 9.40% | 9.40% |
| Oil | 8.00% | 5.00% | 5.00% | 5.00% | 5.00% | 5.00% | 5.00% |
| Polypropylene | 5.00% | 5.00% | 5.00% | 5.00% | 5.00% | 5.00% | 5.00% |
| Modified Low MW PP | — | 2.50% | 2.50% | 5.00% | 5.00% | 10.00% | 10.00% |
| ATH | — | — | — | — | — | — | — |
| Surface Treated Mg(OH)$_2$ | 70.40% | 70.00% | 70.00% | 70.00% | 70.00% | 70.00% | 70.00% |
| Irganox 1010 | 0.25% | 0.25% | 0.25% | 0.25% | 0.25% | 0.25% | 0.25% |
| Irganox 1024 | 0.10% | 0.10% | 0.10% | 0.10% | 0.10% | 0.10% | 0.10% |
| DLTDP | 0.25% | 0.25% | 0.25% | 0.25% | 0.25% | 0.25% | 0.25% |
| Stress at Break (MPa) | 2.76 | 7.45 | 7.10 | 10.7 | 10.7 | Brittle | Brittle |
| Elongation at Break (%) | 370 | 0 | 0 | 0 | 0 | — | — |
| Line speed (cm/s) | 127 | 23 | 127 | 25 | 127 | 23 | 127 |
| Screw speed (RPM)[1] | 150 | 29 | 140 | 28 | 140 | 31 | 130 |
| Power Input (Ampère) | 10 | 15 | 20.5 | 13 | 20 | 11 | 16 |
| Head Pressure (MPa) | 9.2 | 22 | 23 | 19 | 22 | 15 | 17 |
| Limiting Oxygen Index % | 31.0 | 31.5 | 31.5 | 29.0 | 29.0 | — | — |

1) revolutions per minute.

Examples 18 – 20

Examples 18 – 20 were carried out as described in Examples 1 – 11 and Table V with the difference that a functionalized low molecular weight polypropylene wax was used; this wax was the same as that used in Examples 12 – 17. The results are presented in Table V. Comparison between Example 5 and Examples 18 – 20 shows that the presence of said wax allows an increase in stress at break and easier processing as demonstrated in the decreased head pressure and lower power imput in the extruder.

TABLE V

| | Example | | | |
|---|---|---|---|---|
| | 5 | 18 | 19 | 20 |
| Block Copolymer Rubber 1 | 18.05% | 17.55% | 17.05% | 16.05% |
| Oil | 4.00% | 4.00% | 4.00% | 4.00% |
| Modified Polypropylene | 7.35% | 7.35% | 7.35% | 7.35% |
| Functionalized Low MW PP | –– | 0.50% | 1.00% | 2.00% |
| $Mg(OH)_2$ Surface treated | 70.00% | 70.00% | 70.00% | 70.00% |
| Irganox 1010 | 0.25% | 0.25% | 0.25% | 0.25% |
| Irganox 1024 | 0.10% | 0.10% | 0.10% | 0.10% |
| DLTDP | 0.25% | 0.25% | 0.25% | 0.25% |
| | | | | |
| Stress at Break (MPa) | 9.31 | 9.52 | 9.58 | 9.65 |
| Elongation at Break (%) | 330 | 310 | 310 | 220 |
| | | | | |
| Line speed (cm/s) | 25 | 25 | 25 | 25 |
| Screw speed (RPM)[1] | 36 | 30 | 36 | 36 |
| Power Input (Ampère) | 24 | 23 | 22.5 | 23 |
| Head Pressure (MPa) | 38 | 34 | 33 | 35 |

_____

[1] revolutions per minute.

Claims

Claims for the following Contracting States : AT, BE, CH, LI, DE, FR, GB, NL, IT, SE

1. A flame retardant insulation composition comprising the following components: –
   (a) in the range of from 5 to 40 per cent by weight of a hydrogenated monoalkylarene (A) – conjugated diene (B) block copolymer containing at least two end blocks A and at least one mid block B;
   (b) in the range of from 1 to 20 per cent by weight of a plasticizer;
   (c) in the range of from 1 to 40 per cent by weight of an isotactic or syndiotactic polypropylene;

(d) in the range of from 10 to 85 per cent by weight of a hydrated inorganic filler which has been surface treated with a coupling agent;

characterized in that said polypropylene may optionally have been functionalized and that a func‒tionalized low molecular weight polypropylene wax is included as component (e) in an amount in the range of from 0.25 to 10 per cent by weight.

2. A composition as claimed in claim 1 wherein the block copolymer is a hydrogenated styrene‒butadiene‒styrene block copolymer.

3. A composition as claimed in claim 1 or 2 wherein the polypropylene is maleic anhydride functionalized.

4. A composition as claimed in any one of the preceding claims wherein the plasticizer is a mineral oil or a styrene butadiene diblock copolymer.

5. A composition as claimed in any one of claims 1 to 4 wherein the filler is magnesium hydroxide.

6. A composition as claimed in any one of the preceding claims wherein the coupling agent is a fatty acid metal salt, a maleate, a silane, a titanate or a zirco‒aluminate.

7. A composition as claimed in claim 6 wherein the coupling agent is an oleate or a stearate.

8. A composition as claimed in any one of the preceding claims wherein the hydrated magnesium hydroxide has a mean secondary particle size in the range of from 0.6 to 1.2 $\mu$m.

9. A composition as claimed in any one of the preceding claims wherein the hydrated magnesium hydroxide has a crystallite aspect ratio greater than 4.

10. A composition as claimed in any one of the preceding claims wherein the functionalized low molecular weight polypropylene wax is a maleic anhydride functionalized low molecular weight polypropylene wax.

11. A composition as claimed in any one of the preceding claims which comprises in the range of from 15 to 20 weight per cent of component (a), 4 to 8 weight per cent of component (b), 4 to 8 weight per cent of component (c) and 63 to 75 weight per cent of component (d).

12. A composition as claimed in claim 11 which also comprises in the range of from 0.5 to 5 weight per cent of component (e).

13. A process for the preparation of a flame retardant insulation composition as claimed in any one of the preceding claims which process comprises combining

(a) in the range of from 5 to 40 per cent by weight of a hydrogenated monoalkylarene (A)‒conjugated diene (B) block copolymer containing at least two end blocks A and at least one mid block B;

(b) in the range of from 1 to 20 per cent by weight of a plasticizer;

(c) in the range of from 1 to 40 per cent by weight of an isotactic or syndiotactic polypropylene;

(d) in the range of from 10 to 85 per cent by weight of a hydrated inorganic filler which has been surface treated with a coupling agent;

characterized in that said polypropylene may optionally have been functionalized and that a func‒tionalized low molecular weight polypropylene wax is included as component (e) in an amount in the range of from 0.25 to 10 per cent by weight.

**Claims for the following Contracting State : ES**

1. A process for the manufacture of a flame retardant insulation composition comprising compounding the following components: ‒

(a) in the range of from 5 to 40 per cent by weight of a hydrogenated monoalkylarene (A) conjugated diene (B) block copolymer containing at least two end blocks A and at least one mid block B;

(b) in the range of from 1 to 20 per cent by weight of a plasticizer;

(c) in the range of from 1 to 40 per cent by weight of an isotactic or syndiotactic polypropylene, which optionally have been functionalized;

(d) in the range of from 10 to 85 per cent by weight of a hydrated inorganic filler which has been surface treated with a coupling agent; and

(e) a functionalized low molecular weight polypropylene wax in an amount in the range of from 0.25 to 10 per cent by weight.

2. A process as claimed in claim 1 wherein the block copolymer is a hydrogenated styrene – butadiene – styrene block copolymer.

3. A process as claimed in claim 1 or 2 wherein the polypropylene is maleic anhydride functionalized.

4. A process as claimed in any one of the preceding claims wherein the plasticizer is a mineral oil or a styrene butadiene diblock copolymer.

5. A process as claimed in any one of claims 1 to 4 wherein the filler is magnesium hydroxide.

6. A process as claimed in any one of the preceding claims wherein the coupling agent is a fatty acid metal salt, a maleate, a silane, a titanate or a zirco – aluminate.

7. A process as claimed in claim 6 wherein the coupling agent is an oleate or a stearate.

8. A process as claimed in any one of the preceding claims wherein the hydrated magnesium hydroxide has a mean secondary particle size in the range of from 0.6 to 1.2 $\mu$m.

9. A process as claimed in any one of the preceding claims wherein the hydrated magnesium hydroxide has a crystallite aspect ratio greater than 4.

10. A process as claimed in any one of the preceding claims wherein the functionalized low molecular weight polypropylene wax is a maleic anhydride functionalized low molecular weight polypropylene wax.

11. A process as claimed in any one of the preceding claims which comprises in the range of from 15 to 20 weight per cent of component (a), 4 to 8 weight per cent of component (b), 4 to 8 weight per cent of component (c) and 63 to 75 weight per cent of component (d).

12. A process as claimed in claim 11 which also comprises in the range of from 0.5 to 5 weight per cent of component (e).

13. A process as claimed in any one of the preceding claims by blending the components (a) – (e) at a temperature above the melting temperature of the polymeric materials.

**Patentansprüche**
**Patentansprüche für folgende Vertragsstaaten : AT, BE, CH, LI, DE, FR, GB, NL, IT, SE**

1. Flammhemmende Isolierzusammensetzung mit einem Gehalt an den folgenden Komponenten:

(a) im Bereich von 5 bis 40 Gew. – % eines hydriertes Monoalkylaren (A) – konjugiertes Dien (B) – Blockcopolymers, das wenigstens zwei Endblöcke A und wenigstens einen Mittelblock B enthält;

(b) im Bereich von 1 bis 20 Gew. – % eines Weichmachers;

(c) im Bereich von 1 bis 40 Gew. – % eines isotaktischen oder syndiotaktischen Polypropylens;

(d) im Bereich von 10 bis 85 Gew. – % eines hydratisierten anorganischen Füllstoffes, der mit einem Kupplungsmittel oberflächenbehandelt worden ist;

dadurch gekennzeichnet, daß das genannte Polypropylen gewünschtenfalls funktionalisiert worden ist und daß als Komponente (e) ein funktionalisiertes niedermolekulares Polypropylenwachs in einer Menge im Bereich von 0,25 bis 10 Gew. – % enthalten ist.

2. Zusasmmensetzung nach Anspruch 1, worin das Blockcopolymer ein hydriertes Styrol – Butadien – Styrolblockcopolymer ist.

12

3. Zusammensetzung nach Anspruch 1 oder 2, worin das Polypropylen mit Maleinsäureanhydrid funktionalisiert ist.

4. Zusammensetzung nach einem der vorstehenden Ansprüche, worin der Weichmacher ein Mineralöl oder ein Styrol–Butadien–Zweiblockcopolymer ist.

5. Zusammensetzung nach einem der Ansprüche 1 bis 4, worin der Füllstoff Magnesiumnydroxid ist.

6. Zusammensetzung nach einem der vorstehenden Ansprüche, worin das Kupplungsmittel ein Fettsäuremetallsalz, ein Maleat, ein Silan, ein Titanat oder ein Zircoaluminat ist.

7. Zusammensetzung nach Anspruch 6, worin das Kupplungsmittel ein Oleat oder ein Stearat ist.

8. Zusammensetzung nach einem der vorstehenden Ansprüche, worin das hydratisierte Magnesiumhydroxid eine mittlere Sekundärteilchengröße im Bereich von 0,6 bis 1,2 $\mu$m aufweist.

9. Zusammensetzung nach einem der vorstehenden Ansprüche, worin das hydratisierte Magnesiumhydroxid ein Kristallit–Ansichtsverhältnis von größer als 4 aufweist.

10. Zusammensetzung nach einem der vorstehenden Ansprüche, worin das funktionalisierte niedermolekulare Polypropylenwachs ein Maleinsäureanhydridfunktionalisiertes niedermolekulares Polypropylenwachs ist.

11. Zusammensetzung nach einem der vorstehenden Ansprüche, welche im Bereich von 15 bis 20 Gew.–% an Komponente (a), 4 bis 8 Gew.–% an Komponente (b), 4 bis 8 Gew.–% an Komponente (c) und 63 bis 75 Gew.–% an Komponente (d) umfaßt.

12. Zusammensetzung nach Anspruch 11, welche auch im Bereich von 0,5 bis 5 Gew.–% an Komponente (e) umfaßt.

13. Verfahren zur Herstellung einer flammhemmenden Isolierzusammensetzung nach einem der vorstehenden Ansprüche, welches Verfahren ein Vereinigen von
    (a) im Bereich von 5 bis 40 Gew.–% eines hydriertes Monoalkylaren (A)–konjugiertes Dien (B)–Blockcopolymers, das wenigstens zwei Endblöcke A und wenigstens einen Mittelblock B enthält;
    (b) im Bereich von 1 bis 20 Gew.–% eines Weichmachers;
    (c) im Bereich von 1 bis 40 Gew.–% eines isotaktischen oder syndiotaktischen Polypropylens;
    (d) im Bereich von 10 bis 85 Gew.–% eines hydratisierten anorganischen Füllstoffes, der mit einem Kupplungsmittel oberflächenbehandelt worden ist, umfaßt;
    dadurch gekennzeichnet, daß dieses Polypropylen gegebenenfalls funktionalisiert worden ist und daß als Komponente (e) ein funktionalisiertes niedermolekulares Polypropylenwachs in einer Menge im Bereich von 0,25 bis 10 Gew.–% eingeschlossen wird.

**Patentansprüche für folgenden Vertragsstaat : ES**

1. Verfahren zur Herstellung einer flammhemmenden Isolierzusammensetzung, welches ein Kompoundieren der folgenden Komponenten umfaßt:
    (a) im Bereich von 5 bis 40 Gew.–% eines hydriertes Monoalkylaren (A)–konjugiertes Dien (B)–Blockcopolymers, das wenigstens zwei Endblöcke A und wenigstens einen Mittelblock B enthält;
    (b) im Bereich von 1 bis 20 Gew.–% eines Weichmachers;
    (c) im Bereich von 1 bis 40 Gew.–% eines isotaktischen oder syndiotaktischen Polypropylens, das gegebenenfalls funktionalisiert worden ist;
    (d) im Bereich von 10 bis 85 Gew.–% eines hydratisierten anorganischen Füllstoffes, der mit einem Kupplungsmittel oberflächenbehandelt worden ist; und
    (e) ein funktionalisiertes niedermolekulares Polypropylenwachs in einer Menge von 0,25 bis 10 Gew.–%.

2. Verfahren nach Anspruch 1, worin das Blockcopolymer ein hydriertes Styrol–Butadien–Styrolblockcopolymer ist.

13

3. Verfahren nach Anspruch 1 oder 2, worin das Polypropylen mit Maleinsäureanhydrid funktionalisiert ist.

4. Verfahren nach einem der vorstehenden Ansprüche, worin der Weichmacher ein Mineralöl oder ein Styrol – Butadien – Zweiblockcopolymer ist.

5. Verfahren nach einem der Ansprüche 1 bis 4, worin der Füllstoff Magnesiumhydroxid ist.

6. Verfahren nach eineme der vorstehenden Ansprüche, worin das Kupplungsmittel ein Fettsäuremetall – salz, ein Maleat ein Silan, ein Titanat oder ein Zircoaluminat ist.

7. Verfahren nach Anspruch 6, worin das Kupplungsmittel ein Oleat oder ein Stearat ist.

8. Verfahren nach einem der vorstehenden Ansprüche, worin das hydratisierte Magnesiumhydroxid eine mittlere Sekundärteilchengröße im Bereich von 0,6 bis 1,2 $\mu$m aufweist.

9. Verfahren nach einem der vorstehenden Ansprüche, worin das hydratisierte Magnesiumhydroxid ein Kristallit – Ansichtsverältnis von größer als 4 aufweist.

10. Verfahren nach einem der vorstehenden Ansprüche, worin das funktionalisierte niedermolekulare Polypropylenwachs ein Maleinsäureanhydrid – funktionalisiertes niedermolekulares Polypropylenwachs ist.

11. Verfahren nach einem der vorstehenden Ansprüche, welches im Bereich von 15 bis 20 Gew. – % an Komponente (a), 4 bis 8 Gew. – % an Komponente (b), 4 bis 8 Gew. – % an Komponente (c) und 63 bis 75 Gew. – % an Komponente (d) umfaßt.

12. Verfahren nach Anspruch 11, welches zusätzlich im Bereich von 0,5 bis 5 Gew. – % an Komponente (e) umfaßt.

13. Verfahren nach einem der vorstehenden Ansprüche durch Vermischen der Komponenten (a) bis (e) bei einer Temperatur oberhalb der Schmelztemperatur der Polymermaterialien.

**Revendications**
**Revendications pour les Etats contractants suivants : AT, BE, CH, LI, DE, FR, GB, NL, IT, SE**

1. Une composition isolante d'une combustibilité réduite comprenant les constituants suivants :
   (a) de 5 à 50 pour cent en poids d'un copolymère séquencé monoalcoylarène (A) – diène conjugué (B) hydrogéné contenant au moins deux blocs terminaux A et au moins un bloc intermédiaire B ;
   (b) de 1 à 20 pour cent en poids d'un plastifiant ;
   (c) de 1 à 40 pour cent en poids d'un polypropylène isotactique ou syndiotactique ;
   (d) de 10 à 85 % en poids d'une charge inorganique hydratée qui a été traitée en surface par un agent de couplage ;
   caractérisée en ce que le polypropylène peut éventuellement avoir été fonctionnalisé et qu'une cire de polypropylène fonctionnalisé de bas poids moléculaire est incluse comme constituant (e), à raison d'une quantité comprise entre 0,25 et 10 pour cent en poids.

2. Une composition selon la revendication 1, dans laquelle le copolymère séquencé est un copolymère séquencé styrène – butadiène – styrène hydrogéné.

3. Une composition selon la revendication 1 ou 2, dans laquelle le polypropylène est fonctionnalisé par l'anhydride maléique.

4. Une composition selon l'une quelconque des revendications précédentes, dans laquelle le plastifiant est une huile minérale ou un copolymère à deux blocs styrène – butadiène.

5. Une composition selon l'une quelconque des revendications 1 à 4, dans laquelle la charge est de l'hydroxyde de magnésium.

**6.** Une composition selon l'une quelconque des revendications précédentes, dans laquelle l'agent de couplage est un sel de métal d'un acide gras, un maléate, un silane, un titanate ou un zirco – aluminate.

**7.** Une composition selon la revendication 6, dans laquelle l'agent de couplage est un oléate ou un stéarate.

**8.** Une composition selon l'une quelconque des revendications précédentes, dans laquelle l'hydroxyde de magnésium hydraté a une grosseur moyenne des particules secondaires comprise entre 0,6 et 1,2 $\mu$m.

**9.** Une composition selon l'une quelconque des revendications précédentes, dans laquelle l'hydroxyde de magnésium hydraté a un rapport d'aspect des cristallites de plus de 4.

**10.** Une composition selon l'une quelconque des revendications précédentes, dans laquelle la cire de polypropylène fonctionnalisé de bas poids moléculaire est une cire de polypropylène de bas poids moléculaire fonctionnalisée par l'anhydride maléique.

**11.** Une composition selon l'une quelconque des revendications précédentes, qui comprend de 15 à 20 pour cent en poids de constituant (a), de 4 à 8 pour cent en poids de constituant (b), de 4 à 8 pour cent en poids de constituant (c) et de 63 à 75 pour cent en poids de constituant (d).

**12.** Une composition selon la revendication 11, qui comprend aussi de 0,5 à 5 pour cent en poids de constituant (e).

**13.** Un procédé pour la préparation d'une composition isolante d'une combustibilité réduite telle que revendiquée dans l'une quelconque des revendications précédentes, selon lequel on combine
(a) de 5 à 40 pour cent en poids d'un copolymère séquencé monoalcoylarène (A) – diène conjugué (B) hydrogéné contenant au moins deux blocs terminaux A et au moins un bloc intermédiaire B ;
(b) de 1 à 20 pour cent en poids d'un plastifiant ;
(c) de 1 à 40 pour cent en poids d'un polypropylène isotactique ou syndiotactique ;
(d) de 10 à 85 pour cent en poids d'une charge inorganique hydratée qui a été traitée en surface par un agent de couplage ;
caractérisé en ce que le polypropylène peut éventuellement avoir été fonctionnalisé et qu'une cire de polypropylène fonctionnalisé de bas poids moléculaire est incluse comme constituant (e) à raison d'une quantité comprise entre 0,25 et 10 pour cent en poids.

**Revendications pour l'Etat contractant suivant : ES**

**1.** Un procédé pour la préparation d'une composition isolante d'une combustibilité réduite, selon lequel on mélange les constituants suivants :
(a) de 5 à 40 pour cent en poids d'un copolymère séquencé monoalcoylarène (A) – diène conjugué (B) hydrogéné contenant au moins deux blocs terminaux A et au moins un bloc intermédiaire B ;
(b) de 1 à 20 pour cent en poids d'un plastifiant ;
(c) de 1 à 40 pour cent en poids d'un polypropylène isotactique ou syndiotactique, qui peut éventuellement avoir été fonctionnalisé ;
(d) de 10 à 85 pour cent en poids d'une charge inorganique hydratée qui a été traitée en surface par un agent de couplage ; et
(e) une cire de polypropylène fonctionnalisé de bas poids moléculaire à raison d'une quantité comprise entre 0,25 et 10 pour cent en poids.

**2.** Un procédé selon la revendication 1, dans lequel le copolymère séquencé est un copolymère séquencé styrène – butadiène – styrène hydrogéné.

**3.** Un procédé selon la revendication 1 ou 2, dans lequel le polypropylène est fonctionnalisé par l'anhydride maléique.

**4.** Un procédé selon l'une quelconque des revendications précédentes, dans lequel le plastifiant est une huile minérale ou un copolymère à deux blocs styrène – butadiène.

5. Un procédé selon l'une quelconque des revendications 1 à 4, dans lequel la charge est de l'hydroxyde de magnésium.

6. Un procédé selon l'une quelconque des revendications précédentes, dans lequel l'agent de couplage est un sel de métal d'un acide gras, un maléate, un silane, un titanate ou un zirco – aluminate.

7. Un procédé selon la revendication 6, dans lequel l'agent de couplage est un oléate ou un stéarate.

8. Un procédé selon l'une quelconque des revendications précédentes, dans lequel l'hydroxyde de magnésium hydraté a une grosseur moyenne des particules secondaires comprise entre 0,6 et 1,2 $\mu$m.

9. Un procédé selon l'une quelconque des revendications précédentes, dans lequel l'hydroxyde de magnésium hydraté a un rapport d'aspect des cristallites de plus de 4.

10. Un procédé selon l'une quelconque des revendications précédentes, dans lequel la cire de polypropy – lène fonctionnalisé de bas poids moléculaire est une cire de polypropylène de bas poids moléculaire fonctionnalisée par l'anhydride maléique.

11. Un procédé selon l'une quelconque des revendications précédentes, dans lequel on mélange de 15 à 20 pour cent en poids de constituant (a), de 4 à 8 pour cent en poids de constituant (b), de 4 à 8 pour cent en poids de constituant (c) et de 63 à 75 pour cent en poids de constituant (d).

12. Un procédé selon la revendication 11, qui comprend aussi de 0,5 à 5 pour cent en poids de constituant (e).

13. Un procédé selon l'une quelconque des revendications précédentes, dans lequel on mélange les constituants (a) – (e) à une température au – dessus de la température de fusion des matières polymè – res.